# EUROPÄISCHE PATENTSCHRIFT

(11) **EP 0 378 811 B1**
(45) Veröffentlichungstag und Bekanntmachung des Hinweises auf die Patenterteilung: **28.04.1993**
(21) Anmeldenummer: 89123120.1
(22) Anmeldetag: 14.12.1989
(51) Int. Cl.: B60T 13/66, B60T 7/20

(54) **Druckluftbremseinrichtung für Kraftfahrzeuge**
Compressed air brake installation for motor vehicles
Installation de freinage à air comprimé pour véhicules à moteur

(30) Priorität: 18.01.1989 DE 3901270
(43) Veröffentlichungstag der Anmeldung: 25.07.1990
(73) Patentinhaber: ROBERT BOSCH GMBH, 70442 Stuttgart (DE)
(72) Erfinder: Stumpe, Werner, Dipl.-Ing., D-7000 Stuttgart 50 (DE); Wrede, Jürgen, Dipl.-Ing., D-7000 Stuttgart 50 (DE)

(56) Entgegenhaltungen:
- DE-A- 3 524 932
- DE-A- 3 603 963
- DE-B- 2 164 325

## Beschreibung

### Stand der Technik

Die Erfindung geht aus von einer Druckluftbremseinrichtung für Kraftfahrzeuge und der Gattung des Hauptanspruches. Eine derartige Druckluftbremseinrichtung ist bekannt (DE-OS 36 03 963).

Bei dieser bekannten Druckluftbremseinrichtung greift das sensorgesteuerte Korrekturventil in die Anhängerbremsleitung ein, um den Anhängerbremsdruck entsprechend zu variieren. Da aber die Anhängerbremsleitung bei einer Zweileitungsbremsanlage zur Bremssignalübermittlung an das Anhängerbremsventil dient, muß die Anhängerbremsleitung im Notfall immer frei sein. Deshalb hat ein solcher Eingriff in die Anhängerbremsleitung den Nachteil, daß bei einer Fehlschaltung des Korrekturventils das Anhängerbremsventil über die Anhängerbremsleitung, z.B. bei einem Feststellbremsvorgang nicht mehr im Bremssinn umstellbar ist.

### Vorteile der Erfindung

Die eingangs genannte Druckluftbremseinrichtung mit den kennzeichnenden Merkmalen des Hauptanspruches hat demgegenüber den Vorteil, daß die Anhängerbremsleitung auch bei einer Fehlschaltung des Korrekturventils für eine Ansteuerung des Anhängerbremsventils offen bleibt. Damit ist ein wesentlicher Sicherheitsfaktor geschaffen.

Dazu kommt, daß eine vom Anhängersteuerventil in bisher üblicher Weise eingesteuerte Voreilschaltung der Anhängerbremse im Anhängersteuerventil jetzt entfallen kann; damit wird dieses Ventil einfacher im Aufbau. Auch kann auch die Gesamtabmessung des Anhängersteuerventils reduziert werden, da die Steuerkolben keine so großen Wirkflächen benötigen, um ein entsprechendes Ansprechverhalten aufzuweisen. Ansprechdruck und Hystere können elektrisch ausgeglichen werden.

Schließlich kann durch die mögliche schnelle Beeinflussung der Bremskräfte der Auflaufstoß verringert werden, und es ist darüber hinaus auch eine lernende Regelung möglich.

Weitere Vorteile ergeben sich aus der Beschreibung.

### Zeichnung

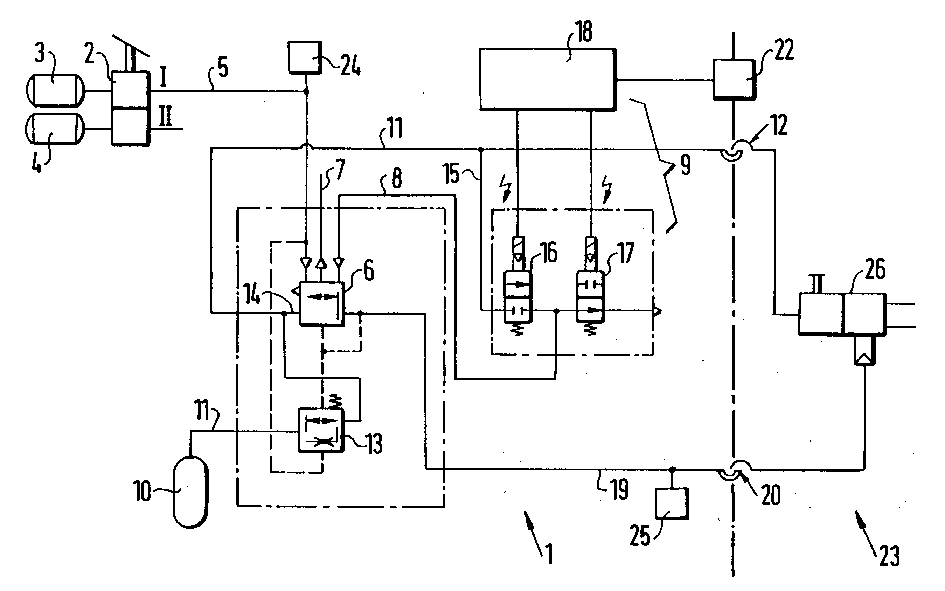

Ein Ausführungsbeispiel der Erfindung ist in der Zeichnung dargestellt und in der nachfolgenden Beschreibung näher erläutert.

### Beschreibung der Ausführungsbeispiele

Eine Druckmittelbremseinrichtung hat auf einem Zugwagen 1 ein zweikreisiges Betriebsbremsventil 2, das Druckluft aus zwei Vorratsbehältern 3 und 4 in je einen Betriebsbremskreis I und II gelangen läßt. Der Bremskreis I steuert über eine Leitung 5 ein Anhängersteuerventil 6 mit Druckanstieg. Eine zweite Steuerleitung 7 ist von einer nicht dargestellten Feststellbremse herangeführt; mit ihrem Druck kann das Anhängersteuerventil 6 durch Druckabfall im Bremssinn umgeschaltet werden.

Eine dritte Steuerleitung 8 am Anhängersteuerventil 6 dient wiederum einer Druckanstiegssteuerung. Sie ist aber nicht von dem Betriebsbremsventil 2 herangeführt, sondern von einem Korrekturventil 9 und erhält ihren Druck aus einem auf dem Zugwagen 1 angeordneten Anhänger-Vorratsbehälter 10. In der Verbindung einer Anhängervorratsleitung 11 vom Vorratsbehälter 10 zu einem Vorratsluft-Kupplungskopf 12 liegt ein an das Anhängersteuerventil 6 angeflanschtes Drosselventil 13, das von Drücken aus den gestrichelt eingezeichneten Leitungen umschaltbar ist. Eine erste Abzweigung 14 der Anhängervorratsleitung 11 führt zum Anhängersteuerventil 6 und eine zweite Abzweigung 15 der Anhängervorratsleitung 11 führt zu zwei Magnetventilen 16 und 17 des Korrekturventils 9. Die Impulse für die Magnetventile 16 und 17 werden durch ein Steuergerät 18 erstellt, das ebenfalls zum Korrekturventil 9 gehört.

Vom Anhängersteuerventil 6 nimmt eine Anhängerbremsleitung 19 ihren Ausgang, die zu einem Bremsleitungskupplungskopf 20 führt. Das Steuergerät 18 hat eine Verbindung mit einem Sensor 22 für die Auflaufkräfte zwischen einem mit dem Zugwagen 1 gekuppelten Anhänger 23 und dem Zugwagen 1. Am Bremsventil 2 und in der Anhängerbremsleitung sitzt je ein Drucksensor 24 bzw. 25.

Der Anhänger 23 hat eine übliche Anhängerbremsanlage, von der im wesentlichen jedoch nur ein Anhängerbremsventil 26 dargestellt ist.

### Wirkungsweise

Beim Betätigen des Betriebsbremsventils 2 wird vom Drucksensor 24 ein Sollwert erstellt und an das Steuergerät 18 gegeben. Der andere in der Anhängerbremsleitung 19 liegende Drucksensor 25 mißt den zum Anhänger 23 hin ausgesteuerten Druck als Istwert.

Im Steuergerät 18 werden die beiden Drücke miteinander verglichen. Entsprechend dem Ergebnis des Vergleiches und anderer gespeicherter Kritieren werden dann die beiden Magnetventile 16 und 17 angesteuert, um Druck aus der Vorratsleitung 11 über die Leitung 8 zum Anhängersteuerventil 6 gelangen zu lassen. Das Anhängersteuerventil 6 steuert dann den Druck in der Anhängerbremsleitung 19 entsprechend.

Es ist auch eine Drucksteuerung möglich, bei welcher der Istwert über die Öffnungszeiten der Magnetventile 16 und 17 oder über ein Proportionalventil gesteuert wird.

In einem solchen Fall kann dann der Drucksensor 25 entfallen.

Besonders vorteilhaft ist die "lernende Regelung" gemäß der Erfindung. Diese wird dadurch geschaffen, daß beim ersten Bremsen vom Sensor 24 der Drucksollwert und vom Sensor 25 der Druckistwert bei Deichselkraft Null (Sensor 22) gemessen werden, d.h., daß beim ersten Bremsen der Druck in der Anhängerbremsleitung so lange erhöht wird, bis die Deichselkraft Null ist, unabhängig (innerhalb vorgegebener Grenzen) vom Drucksollwert bei 24. Die Differenz dieser Drücke ist ein Maß für die notwendige Korrektur des Druckes in der Anhängerbremsleitung. Aus dieser Differenz wird im Steuergerät (18) ein Bremsdruckkorrekturwert abgeleitet.

Der Bremsdruckkorrekturwert (Faktor oder Wert, der zum Sollwert addiert oder subtrahiert wird) wird im Steuergerät 18 gespeichert und bei der nächsten Bremsung wird der mit diesem Korrekturwert modifizierte Solldruck im vorhinein in die Anhängerbremsleitung 19 eingesteuert und eventuell wiederum durch den Deichselkraftsensor (22) korrigiert.

Dieser Vorgang wiederholt sich bei jeder Bremsung, so daß eine laufende Anpassung des Bremsdruckkorrekturwertes an die Fahrzeugverhältnisse stattfindet.

Bei zusätzlicher Verwendung einer verschließbaren Dauerbremse auf dem Zugfahrzeug kann bei gleichzeitigem Einsatz der Betriebsbremse und der Dauerbremse die Steuerung des Druckes in der Anhängerbremsleitung 19 durch den eventuell modifizierten Druck durchgeführt werden.

## Patentansprüche

1. Druckluftbremseinrichtung für Kraftfahrzeuge (1, 23), mit mindestens einem über ein Bremsventil (2) gesteuerten Betriebsbremskreis (I), einem den Druck in einer Anhängerbremsleitung (19) steuernden Anhängersteuerventil (6), einer Zweileitungsbremsanlage mit einem über die Anhängerbremsleitung (19) und eine Anhängervorratsleitung (11) mit dem Anhängersteuerventil (6) verbundenen Anhängerbremsventil (26), einem den Druck in der Anhängerbremsleitung (19) einstellenden, an Vorratsluft angeschlossenen Korrekturventil (9) für die Bremskraftbeeinflussung am Anhänger (23), sowie einem dem Korrekturventil (9) zugeordneten Steuergerät (18), an das ein Drucksensor (24) und ein Deichselkraftsensor (22) angeschlossen und in dem Signale gemäß einem installierten Regelalgorithmus modifizierbar und an das Korrekturventil (9) abgebbar sind, dadurch gekennzeichnet, daß mit dem Drucksensor (24) ein vom Bremsventil (2) zum Anhängersteuerventil (6) eingesteuerter Drucksollwert aufnehmbar ist und daß das Korrekturventil (9) mit einer Steuerleitung (8) an einen Steuereingang des Anhängersteuerventils (6) angeschlossen ist.

2. Druckluftbremseinrichtung nach Anspruch 1, dadurch gekennzeichnet, daß die Modifikation beim Bremsen und bei Deichselkraft Null durch einen Algorithmus erreicht wird, mit dem der Differenzdruck zwischen einem vom Bremsventil (2) eingesteuerten, mittels des Drucksensors (24) erfaßten Drucksollwert und einem vom Anhängersteuerventil (6) ausgesteuerten, von einem zweiten Sensor (25) aufgenommenen Druckistwert ermittelt und daraus ein Korrekturwert für den Anhängerbremsleitungsdruck gebildet wird, wobei bei der darauffolgenden Bremsung der um den bei der vorhergehenden Bremsung gespeicherten Korrekturwert modifizierte Soll-Bremsdruck in die Anhängerbremsleitung (19) eingespeist wird.

3. Druckluftbremseinrichtung nach einem der Ansprüche 1 oder 2 mit einer verschleißlosen Dauerbremse, dadurch gekennzeichnet, daß bei gleichzeitigem Einsatz der Betriebsbremse und der Dauerbremse das Korrekturventil (9) einen modifizierten Druckwert in das Anhängersteuerventil (6) einsteuert.

## Claims

1. Compressed air brake device for motor vehicles (1, 23), having at least one operating brake circuit (I) controlled by a brake valve (2), having a trailer control valve (6) controlling the pressure in a trailer brake conduit (19), having a twin-conduit brake system with a trailer brake valve (26) connected to the trailer control valve (6) via the trailer brake conduit (19) and a trailer supply conduit (11), having a correction valve (9) for influencing the braking force at the trailer (23), which correction valve (9) adjusts the pressure in the trailer brake conduit (19) and is connected to supply air, and having a control unit (18), associated with the correction valve (9), to which are connected a pressure sensor (24) and a drawbar force sensor (22) and in which signals can be modified in accordance with an installed control algorithm and emitted to the correction valve (9), characterised in that a required pressure value, which is inserted into the trailer control valve (6) by the brake valve (2), can be picked up by the pressure sensor (24) and that the correction valve (9) is connected by means of a control conduit (8) to a control input of the trailer control valve (6).

2. Compressed air brake device according to Claim 1, characterised in that the modification during braking and with zero drawbar force is achieved by means of an algorithm which determines the differential pressure between a required pressure value inserted by the brake valve (2) and recorded by means of the pressure sensor (24), on the one hand, and an actual pressure value output by the trailer control valve (6) and picked up by a second sensor (25), on the other, and from it forms a correction value for the trailer brake conduit pressure, the required brake pressure modified by the correction value stored during the previous braking operation being fed into the trailer brake conduit (19) during the subsequent braking operation.

3. Compressed air brake device according to one of Claims 1 or 2, having a zero-wear retarder, characterised in that in the case of simultaneous use of the operating brake and the retarder, the correction valve (9) inserts a modified pressure value into the trailer control valve (6).

## Revendications

1. Installation de freinage à air comprimé pour véhicules à moteur (1, 23) ayant au moins un circuit de freinage de fonctionnement (I) commandé par une soupape de frein (2), une soupape de commande de remorque (6) qui commande la pression dans la conduite de freinage de remorque (19), une installation de freinage à deux circuits avec une soupape de freinage de remorque (26) reliée par la conduite de freinage de remorque (19) et une conduite d'alimentation de remorque (11) à la soupape de commande de remorque (6), une soupape de correction (9) reliée à l'air d'alimentation et réglant la pression dans la conduite de freinage de remorque (19) pour influencer la force de freinage dans la remorgue (23) ainsi qu'un appareil de commande (18) associé à la soupape de correction (9), appareil auquel est relié un capteur de pression (24) et un capteur de force exercée sur le timon (22), appareil dans lequel les signaux peuvent être modifiés suivant un algorithme de régulation, mis en place, pour être fournis à une soupape de correction (9), installation caractérisée en ce que le capteur de pression (24) peut détecter une valeur de consigne de pression fournie par la soupape de frein (2) à la soupape de commande de remorque (6) et en ce que la soupape de correction (9) est reliée par une conduite de commande (8) à une entrée de commande de la soupape de commande de remorque (6).

2. Installation de freinage à air comprimé selon la revendication 1, caractérisée en ce qu'un algorithme permet d'obtenir une modification nulle pour le freinage et la force exercés sur le timon, en déterminant la différence de pression entre, d'une part une valeur de consigne de pression induite par la soupape de freinage (2) et captée par un capteur de pression (24) et d'autre part une valeur réelle de pression commandée par la soupape de commande de remorque (6) et captée par un second capteur (25) et on en déduit une grandeur de correction pour la pression dans la conduite de freinage de remorque, et lors du freinage suivant, on induit dans la conduite de freinage de remorque (19) la pression de freinage de consigne, modlfiée par la valeur de correction mise en mémoire pendant le freinage précédent.

3. Installation de freinage à air comprimé selon l'une des revendications 1 ou 2, avec un frein permanent sans usure, caractérisée en ce que pour la mise en oeuvre simultanée du frein de fonctionnement et du frein permanent, la soupape de correction (9) commande une valeur de pression modifiée dans la soupape de commande de remorque (6).
